# FASCICULE DE BREVET EUROPEEN

(11) **EP 0 534 516 B1**
(45) Date de publication et mention de la délivrance du brevet: **12.07.1995**
(21) Numéro de dépôt: 92202626.5
(22) Date de dépôt: 31.08.1992
(51) Int. Cl.: A22C 9/00

(54) **Attendrisseur**
Mürbemacher
Tenderiser

(30) Priorité: 10.09.1991 BE 9100840
(43) Date de publication de la demande: 31.03.1993
(73) Titulaire: Paulus, Daniel Stuart, B-1080 Bruxelles (BE)
(72) Inventeur: Paulus, Daniel Stuart, B-1080 Bruxelles (BE)
(74) Mandataire: Claeys, Pierre

(56) Documents cités:
- FR-A- 1 018 796
- FR-A- 1 394 786
- FR-A- 2 140 776
- GB-A- 2 018 183
- US-A- 2 253 123
- US-A- 2 322 243

## Description

La présente invention concerne un attendrisseur, en particulier pour de la viande de boucherie, comportant :
- un plateau pour recevoir une pièce de viande à attendrir,
- un dispositif mobile présentant des moyens de support d'une grille destinée à immobiliser et maintenir la pièce de viande sur le plateau pendant les opérations d'attendrissage, entre autres pendant la remontée des couteaux, et
- des couteaux d'attendrissage destinés à coopérer avec la grille susdite et montés sur un support mobile. Un attendrisseur de ce genre est par example décrit dans US-A-2 322 243.

Les attendrisseurs connus à ce jour présentent tous l'inconvénient d'être munis de couteaux qui, lors de leurs démontages fréquents, font courir à l'utilisateur des risques sérieux de blessures particulièrement graves vu les formes des tranchants des couteaux et leur degré d'affûtage. Ces démontages fréquents sont par exemple nécessaires pour le nettoyage et la stérilisation des éléments qui entrent en contact avec les pièces de viande.

L'invention a pour but de remédier à cet inconvénient et de procurer un attendrisseur dont les manipulations des couteaux sont sans risques pour l'utilisateur.

Suivant l'invention, les couteaux sont montés sur le support mobile précité par l'intermédiaire d'un support auxiliaire, ce dernier étant articulé sur le support mobile précité autour d'un arbre porté par ce dernier support et dont l'axe est parallèle à la direction de déplacement dudit support mobile, de manière à permettre le dégagement des couteaux, par pivotement autour dudit axe, du support mobile, des moyens étant prévus pour immobiliser temporairement le support auxiliaire par rapport au support mobile.

D'autres détails et particularités de l'invention ressortiront de la description des dessins qui sont annexés au présent mémoire et qui illustrent, à titre d'exemples non limitatifs, une forme de réalisation particulière de l'attendrisseur suivant l'invention.

La figure 1 est une vue latérale schématique en élévation, avec brisures partielles, de l'attendrisseur suivant l'invention.

La figure 2 illustre, avec brisures partielles, l'attendrisseur après le démontage de la grille.

La figure 3 est une vue analogue aux figures 1 et 2, et montre les couteaux en voie de dégagement de l'attendrisseur.

La figure 4 montre dans une vue frontale schématique, avec brisures partielles, une étape suivante de démontage des couteaux.

Dans les différentes figures, les mêmes notations de référence désignent des éléments identiques ou analogues.

L'attendrisseur suivant l'invention et illustré aux dessins est désigné dans son ensemble par la référence 1. Cet attendrisseur 1 comporte généralement un plateau (non représenté) sur lequel est déposée une pièce de viande (non représentée) à attendrir, le plateau étant usuellement facilement détachable de l'attendrisseur pour être nettoyé et stérilisé.

L'attendrisseur 1 comporte aussi des couteaux d'attendrissage 2 fixés par exemple sous un support mobile 3, ce dernier pouvant être actionné dans un mouvement de descente pour enfoncer les couteaux 2 dans la pièce de viande à attendrir ou dans un mouvement de montée pour en retirer les couteaux 2. Le support mobile 3 est guidé par exemple (figure 4) par deux colonnes 12 verticales et perpendiculaires au plateau et reliées l'une à l'autre par une entretoise 13.

Pour entre autres maintenir la pièce de viande sur le plateau lors de la montée du support mobile 3, il est usuel de disposer entre les couteaux 2 des barreaux d'une grille 4 qui prend appui sur la pièce de viande, en cours de descente du support mobile 3, avant que les couteaux 2 n'entrent dans la pièce de viande et qui quitte cette dernière après que ces mêmes couteaux 2 sont sortis de ladite pièce de viande. Une grille 4 de ce genre est par exemple décrite dans la BE-A-09100840 du même déposant.

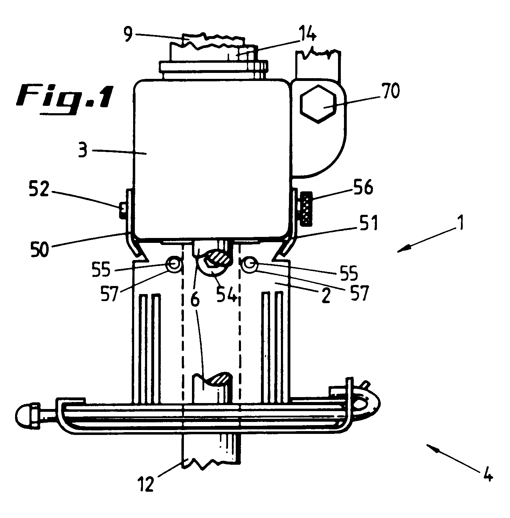

Pour guider et commander la grille 4 à partir par exemple des déplacements du support mobile 3, il est prévu un dispositif mobile 8 connu en soi qui présente des moyens de support 5 (figure 4) de ladite grille 4, ces moyens de support 5 étant représentés dans le présent exemple sous la forme de deux montants parallèles 6 (figures 1 à 4) qui comportent chacun avantageusement un patin 7 fixé à leur extrémité inférieure pour constituer un appui adéquat et une fixation pour la grille 4. Les montants 6 peuvent être reliés entre eux par une traverse 9 et coulisser dans des buselures de guidage 10 agencées dans le support mobile 3. Les deux extrémités de la traverse 9 peuvent entrer chacune dans une gorge annulaire d'une bague de blocage et de butée connue 14 coulissant le long d'une colonne 12 correspondante. La position des bagues 14 à la figure 4 correspond à la position de repos de l'attendrisseur 1, la grille 4 n'étant pas en contact avec la pièce de viande. Les montants 6 sont en outre avantageusement parallèles aux colonnes 12.

La liaison entre la traverse 9 et les montants 6 est avantageusement réalisée par pinçage de ces derniers pour permettre par exemple un réglage de la distance entre plateau et patins 7 en libérant un ou les deux montants 6 et en les glissant à travers la traverse 9.

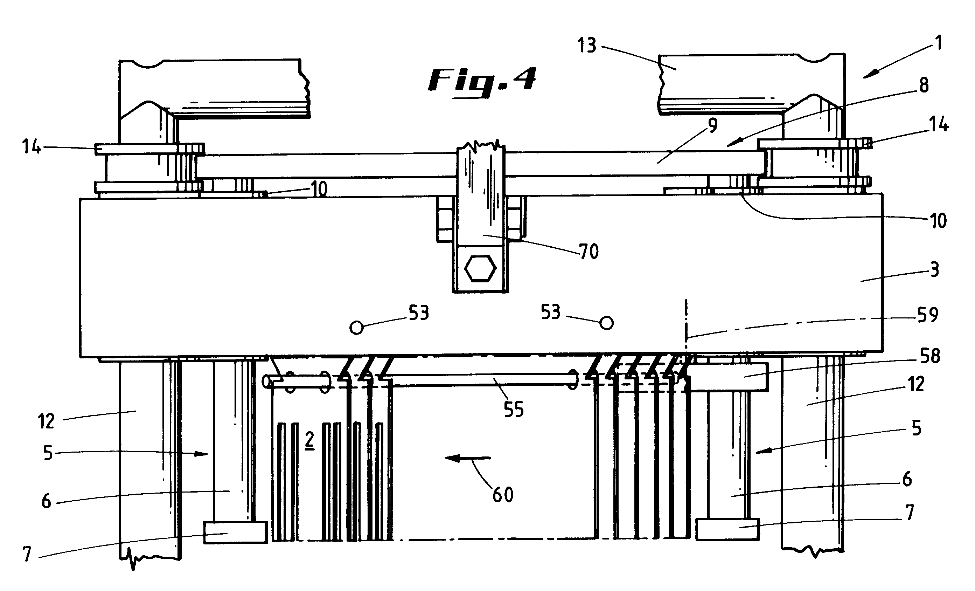

Suivant les figures 1 à 3, les couteaux d'attendrissage 2 peuvent être fixés au support mobile 3 par un serrage entre des flasques fixe 50 et amovible 51 situés de part et d'autre des couteaux 2, le flasque 50 fixe tenant sur une face verticale du support mobile 3 par exemple par des vis 52 dont l'extrémité filetée 53 peut sortir par la face verticale opposée dudit support mobile 3 (figure 3). Les extrémités filetées 53 peuvent par exemple recevoir alors chacune un écrou moleté 56 pour fixer sans outil le flasque amovible 51 sur le support mobile 3.

Les couteaux 2 peuvent être libres l'un par rapport à l'autre et agencés à distance l'un de l'autre par des éléments d'écartement connus pour passer chaque fois entre deux barreaux de la grille 4. Les couteaux 2 peuvent être assemblés en blocs de couteaux de façon connue en soi, au moyen par exemple d'un ensemble de tige et vis 54 (figures 1 et 3), de façon à garder la distance précitée entre les couteaux. Les flasques 50 et 51 et l'extrémité des couteaux 2 du côté du support mobile 3 peuvent présenter un genre de serrage à queue d'aronde pour presser, par le serrage, les faces supérieures des couteaux 2 contre la face inférieure du support mobile 3. Des butées non représentées peuvent être prévues pour localiser les couteaux 2 par rapport à la grille 4 entre les deux montants 6.

Suivant l'invention, les couteaux 2 sont montés sur le support mobile 3 par l'intermédiaire d'un support auxiliaire constitué, dans l'exemple de réalisation illustré, par deux tiges 55 parallèles entre elles et, comme le montrent les dessins, parallèles à la face inférieure du support mobile 3. Ces tiges parallèles 55 passent par des trous appropriés 57 dans les couteaux et sont portées à une de leurs extrémités, à droite à la figure 4, par un élément 58 fixé à un arbre dont l'axe porte la référence 59 aux figures 3 et 4. Cet arbre parallèle aux colonnes 12 est monté d'une manière connue en soi dans le support mobile 3 pour pouvoir pivoter autour d'un axe 59 de façon que les tiges parallèles 55 puissent occuper entre autres une position parallèle aux flasques d'enserrage 50 et 51 quand les couteaux 2 sur les tiges parallèles 55 sont en position d'attendrissage et une position de dégagement (suivant la flèche 60 de la figure 4) lorsque le flasque amovible 51 est enlevé, cette position de dégagement étant illustrée après pivotement aux figures 3 et 4. Le pivotement des tiges 55 a donc lieu sensiblement parallèlement à la face inférieure du support mobile 3 contre laquelle sont pressés les couteaux 2 en position d'attendrissage.

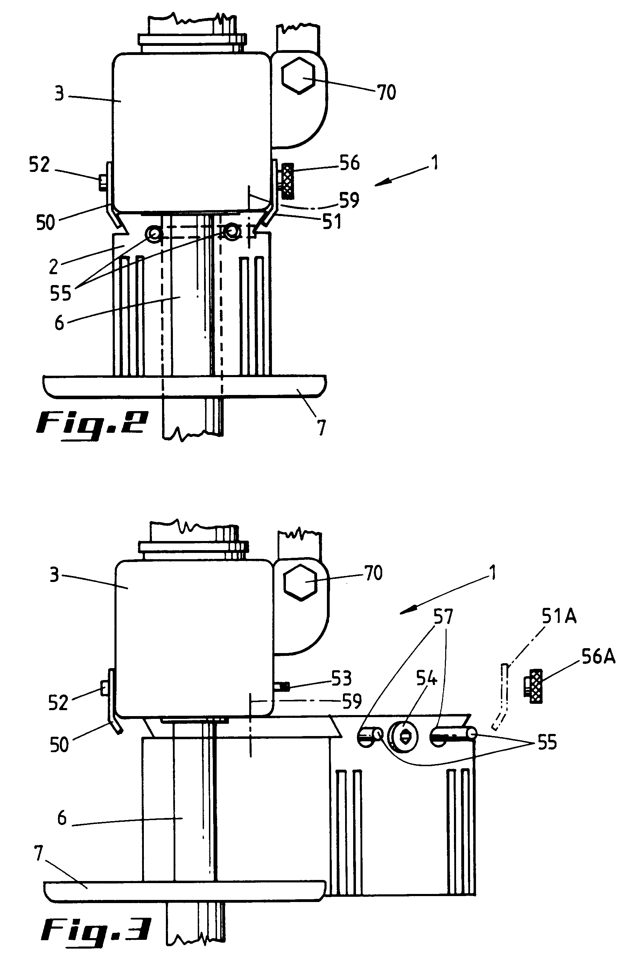

Un montage des couteaux 2 dans l'attendrisseur peut être effectué, sans devoir manipuler ceux-ci par leurs côtés effilés, en les tenant soit séparément soit en bloc par leur extrémité en queue d'aronde pour les enfiler à l'inverse de la flèche 60 sur les tiges parallèles 55 pivotées dans la position représentée aux figures 3 et 4. Ensuite, par pivotement on amène les couteaux 2 sous le support mobile 3, l'écartement entre ce dernier et les tiges parallèles 55 étant prévu pour que la face supérieure des couteaux 2 soit pratiquement contre la face inférieure dudit support mobile 3. Le flasque 51 et les écrous moletés 56, représentés à l'écart à la figure 3 sous les références 51A et 56A, sont mis en place comme représenté à la figure 2 et le serrage des écrous moletés 56 provoque un enserrage d'immobilisation des couteaux 3, entre flasques 50 et 51 et face inférieure du support mobile 3. Il en résulte automatiquement l'immobilisation des tiges parallèles 55 situées dans les couteaux 2.

Un démontage des couteaux 2 est effectué en sens inverse du montage précité.

La référence 70 désigne l'extrémité d'un dispositif de commande, connu en soi, pour le déplacement du support mobile 3 lors d'un attendrissage.

Il doit être entendu que l'invention n'est nullement limitée aux formes de réalisation décrites et que bien des modifications peuvent être apportées à ces dernières sans sortir du cadre des revendications. Ainsi, au lieu de l'enserrage par les flasques 50 et 51, l'immobilisation des tiges parallèles 55 et donc des couteaux 2 peut être réalisée par une immobilisation appropriée des extrémités libres des tiges parallèles 55 par rapport au support mobile 3.

## Revendications

1. Attendrisseur (1), en particulier pour de la viande de boucherie, comportant :
- un plateau pour recevoir une pièce de viande à attendrir,
- un dispositif mobile (8) présentant des moyens de support (5) d'une grille (4) destinée à immobiliser et maintenir la pièce de viande sur le plateau pendant les opérations d'attendrissage, et
- des couteaux d'attendrissage (2) destinés à coopérer avec la grille (4) susdite et montés sur un support mobile (3),
caractérisé en ce que les couteaux (2) sont montés sur le support mobile (3) précité par l'intermédiaire d'un support auxiliaire (55), ce dernier étant articulé sur le support mobile (3) précité autour d'un arbre porté par ce dernier support (3) et dont l'axe (59) est parallèle à la direction de déplacement dudit support mobile, de manière à permettre le dégagement des couteaux (2), par pivotement autour dudit axe (59), du support mobile (3), des moyens (50, 51) étant prévus pour immobiliser temporairement le support auxiliaire par rapport au support mobile (3).

2. Attendrisseur suivant la revendication 1, caractérisé en ce que le support auxiliaire est constitué par au moins une tige (55) fixée, par une de ses extrémités, à l'arbre précité perpendiculairement à celui-ci et parallèlement au support mobile (3), les couteaux (2) séparés ou un ensemble de couteaux (2) formant un seul bloc étant enfilé sur ladite tige (55), les moyens susdits prévus pour immobiliser temporairement le support auxiliaire par rapport au support mobile (5) étant constitués par deux flasques (50, 51) parallèles à la tige (55) lorsque le support auxiliaire occupe sa position d'attendrissage et agencés sur le support mobile (3) pour enserrer les couteaux (2) de part et d'autre de la tige (55).

## Claims

1. Tenderizer (1), in particular for butcher's meat, comprising :
- a tray to take the piece of meat to be tenderised,
- a movable appliance (8) comprising the means of support (5) for a grid (4) the purpose of which is to immobilise and hold the piece of meat on the tray during the tenderising operations, and
- tenderising cutters (2) to work together with the aforesaid grid (4) which are mounted on a movable support (3),
characterised in that the cutters (2) are mounted on the aforesaid movable support (3) by means of an auxiliary support (55), the latter being articulated on the aforesaid movable support (3) round a shank carried by this latter support (3) and the axis (59) of which is parallel to the direction of movement of the said movable support, in such a way as to permit the disengagement of the cutters (2), by pivoting round the said axis (59), from the movable support (3), the means (50, 51) being provided to temporarily immobilise the auxiliary support relative to the movable support (3).

2. Tenderiser according to claim 1, characterised in that the auxiliary support consists of at least one shaft (55) fixed, at one of its ends, to the aforesaid shank perpendicular to the latter and parallel to the movable support (3), the separate cutters (2) or set of cutters (2) forming a single block being fixed on the said shaft (55), the aforesaid means provided to temporarily immobilise the auxiliary support relative to the movable support (5) consisting of two flanges (50, 51) parallel to the shaft (55) when the auxiliary support is in the tenderising position and arranged on the movable support (3) to grip the cutters (2) on both sides of the shaft (55).

## Patentansprüche

1. Fleischklopfer (1), insbesondere für Schlachtfleisch, mit:
- einer Platte, die ein zu klopfendes Fleischstück aufnimmt,
- einer beweglichen Vorrichtung (8), die Mittel zum Halten (5) eines Gitters (4) aufweist, das dazu bestimmt ist, das Fleischstück auf der Platte während der Klopfvorgänge unbeweglich zu machen und zu halten, und
- Klopfmessern (2), die dazu bestimmt sind, mit dem Gitter (4) zusammenzuwirken, und an einem beweglichen Träger (3) angebracht sind,
dadurch gekennzeichnet, daß die Messer (2) am obengenannten beweglichen Träger (3) über einen Hilfsträger (55) angebracht sind, wobei dieser letztere am obengenannten beweglichen Träger (3) an einer von diesem letzteren Träger (3) unterstützten Welle, deren Achse (59) zur Verschiebungsrichtung des beweglichen Trägers parallel ist, angelenkt ist, derart, daß die Abnahme der Messer (2) durch Schwenken um die Achse (59) des beweglichen Trägers (3) ermöglicht wird, wobei Mittel (50, 51) vorgesehen sind, um den Hilfsträger in bezug auf den beweglichen Träger (3) vorübergehend unbeweglich zu machen.

2. Fleischklopfer nach Anspruch 1, dadurch gekennzeichnet, daß der Hilfsträger durch wenigstens einen Stift (55) gebildet ist, der mit einem seiner Enden an der obengenannten Welle senkrecht zu dieser und parallel zum beweglichen Träger (3) befestigt ist, wobei die getrennten Messer (2) oder eine einen einzigen Block bildende Einheit (2) am Stift (55) aufgereiht sind, wobei die obengenannten Mittel, die dazu vorgesehen sind, den Hilfsträger in bezug auf den beweglichen Träger (5) vorübergehend unbeweglich zu machen, durch zwei zum Stift (55) parallele Flansche (50, 51) gebildet sind, wenn der Hilfsträger seine Klopfposition einnimmt, und am beweglichen Träger (3) so angeordnet sind, daß sie die Messer (2) beiderseits des Stifts (55) einspannen.
